# EUROPÄISCHE PATENTSCHRIFT

(11) **EP 2 012 390 B1**
(45) Veröffentlichungstag und Bekanntmachung des Hinweises auf die Patenterteilung: **28.12.2011**
(21) Anmeldenummer: 08010304.7
(22) Anmeldetag: 06.06.2008
(51) Int. Cl.: H01R 4/64, H01R 4/26, H02G 3/06

(54) **Erdungsklammer zum Potentialausgleich von Leitungsführungskanälen**
Ground clamp for potential equalisation of cable conduits
Pince de mise à la terre destinée à l'équilibrage du potentiel de canaux de câblage

(30) Priorität: 05.07.2007 DE 202007009424 U
(43) Veröffentlichungstag der Anmeldung: 07.01.2009
(73) Patentinhaber: Tehalit GmbH, 67716 Heltersberg (DE)
(72) Erfinder: Mattfeldt, Christian, 66919 Schauerberg (DE)
(74) Vertreter: Patentanwälte Bitterich, Dr. Keller, Schwertfeger

(56) Entgegenhaltungen:
- EP-A1- 1 081 820
- DE-A1- 19 737 893
- DE-U1- 8 410 740
- DE-U1- 9 215 059
- DE-U1-202004 005 987

## Beschreibung

Die vorliegende Erfindung betrifft eine Erdungskupplung zum Potentialausgleich für Leitungsführungskanäle aus Metall gemäß dem Oberbegriff nach Anspruch 1, sowie einen Leitungsführungskanal gemäß dem Oberbegriff nach Anspruch 12.

Die Erdung von Kabelkanalabschnitten stellt eine wichtige Maßnahme für die Sicherheit von Leitungsführungskanälen aus Metall dar. Üblicherweise werden zu diesem Zweck Erdungsklammern verwendet, die in die jeweiligen Kabelkanalabschnitte eingesetzt werden, um diese elektrisch leitend für einen Potentialausgleich zu verbinden.

In der DE 295 08 312 U ist eine Vorrichtung zum Potentialausgleich beschrieben, bei der das Potentialausgleichselement in die Kabelhalteklammer verlagert ist. Die freien Klammerenden der Kabelhalterklammer sind hierbei mit scharfen Kontaktspitzen versehen, die bei der Verklammerung mit den freien, profilierten Enden der Seitenwände des Kanalunterteils zur Herstellung der elektrisch leitenden Verbindung deren Oberfläche gezielt beschädigen. Auf diese Weise wird der Kanaldeckel mit dem Kanalunterteil elektrisch verbunden. Nachteilig ist bei dieser Konstruktion, dass die Montage sehr aufwändig ist und sich der Monteur an den scharfen Kontaktspitzen verletzen kann.

In der DE 297 11 068 wird eine Erdungsklammer beschrieben, die eine Doppelfunktion besitzt, zum einen dient sie als Halteklammer und Abstandshalterung der freien Enden der Seitenwände des Installationskanals und zum anderen zum direkten Potentialausgleich zwischen Kanaloberteil und Kanalunterteil. Die Klammer besteht aus einem Federblech, welches an dessen Längsrändern Kontaktspitzen aufweist, über die eine elektrische Kontaktierung mit dem Unterteil erfolgt, während an den Querrändern die Kontaktspitzen nach oben gebogen ist, so dass eine Kontaktierung mit dem Deckelteil erfolgt. Auch bei dieser Konstruktion besteht ein Verletzungsrisiko für den Monteur bei der Installation aufgrund der nach außen ragenden umlaufenden Spitzen.

In der DE 36 33 604 A1 wird ein Übertragungselement zur Herstellung von Anschlussverbindungen zwischen Gerätekanälen und deren Abdeckungen beschrieben, wobei in einem Querschnittsabschnitt des Gerätekanals und/oder der Abdeckung ein einklemmbares und mit der Potentialausgleichsleitung verbindbares Federblech integriert ist. Das Federblech besteht aus zwei seitlich stumpf von diesen abgewinkelten, ebenfalls rechteckigen, Seitenteilen und weist ein Aufsteckkontaktelement zur Befestigung der Potentialausgleichsleitung auf.

Die EP 1 081 820 A beschreibt, gemäß dem Oberbegriff nach Anspruch 1, eine Vorrichtung zum Herstellen des Potentialausgleichs in Leitungsführungskanälen. Für den Potentialausgleich ist ein aus Stahlblech hergestelltes Stanz-Biegeteil mit einer Basisplatte und einem Fußteil vorgesehen, wobei das Stanz-Biegeteil das Unterteil und den Deckel des Kanals elektrisch kontaktiert. Das Stanz-Biegeteil besitzt wenigstens einen Kontaktfuß, dessen scharfe Kanten sich in eine Halteleiste am Boden des Kanals eingraben. Das Kopfteil des Stanz-Biegeteils besitzt wenigstens eine U-förmige Aussparung, dessen scharfe Kanten und/oder Spitzen sich in ein Kontaktprofil des Deckels eingraben. Das Stanz-Biegeteil ist jedoch nicht dafür geeignet, zwei aufeinander stoßende Kabelkanalabschnitte miteinander zu verbinden und gleichzeitig elektrisch zu kontaktieren.

In der DE 20 2004 005 987 U1 wird ein Kupplungselement beschrieben, welches wenigstens zwei Federelemente aufweist. Das Kupplungselement wird im Montagezustand jeweils bis etwa zur Hälfte längs der Seitenwand in die Endbereiche eines Kabelkanalelementes eingeführt und durch den von dem Federelement aufgebrachten Druck arretiert. Eine elektrische Kontaktierung ist bei diesem Kupplungselement nicht vorgesehen.

In der DE 197 37 893 A1 wird eine Potentialausgleichsklammer für den Potentialausgleich bei einem Installationskanal beschrieben. Die Klammer besitzt nach außen bzw. nach innen ausgeschränkte Kontaktspitzen zum Potentialausgleich. Ferner weist es Hakenteile auf, an deren freien Enden sich ebenfalls Kontaktspitzen befinden. Eine Verbindung zweier Kabelkanalabschnitte ist mit diesem Teil nicht möglich.

Die DE 92 15 059 U1 und DE 84 10 740 U1 beschreiben alternative Verbindungselemente für Installationskanäle.

Vor diesem Hintergrund stellt sich die Aufgabe der vorliegenden Erfindung, eine Erdungskupplung für Leitungsführungskanäle aus Metall bereit zu stellen, die einfach montierbar ist, ein geringes Verletzungsrisiko für den Installateur aufweist und funktionell als Kupplungselement zur Verbindung mehrerer Kabelkanalabschnitte und zum Potentialausgleich einsetzbar ist.

Diese Aufgabe wird gelöst durch eine Erdungskupplung mit dem Merkmalen gemäß Anspruch 1.

Die erfindungsgemäße Erdungskupplung stellt ein multifunktionelles Bauteil dar, mit dem mehrere Funktionen bei der Montage von Leitungsführungskanälen, insbesondere Metallkanälen, erfüllt werden können. Zum einen ist die erfindungsgemäße Erdungskupplung geeignet, zwei hintereinander angeordnete Kabelkanalabschnitte miteinander zu verbinden. Hierzu besitzt die Erdungskupplung wenigstens eine an einem Seitenelement durch einen freiseitigen Freischnitt ausgebildete Zunge. Vorzugsweise sind zwei hintereinander und nach oben versetzte Zungen an dem Seitenelement ausgebildet.

Für die Erzeugung einer größeren Stoßkante ist die Zunge bevorzugt an der Spitze zur Kanalmitte abgewinkelt. Beim Einschieben der erfindungsgemäßen Erdungskupplung in einen Kanalabschnitt wird an dem Seitenelement durch den Widerstand der Kanalseitenwand die vordere Zunge nach innen zur Kanalmitte gedrückt. Die Klammer wird in etwa bis zur Hälfte in den Kanalabschnitt eingeführt, bis die Stoßkante an der Stirnseite der zweiten, hinteren Zungen gegen die Außenkante des Kanalabschnittes stößt. Dadurch wird verhindert, dass die Erdungskupplung zu weit in den Kanalabschnitt eingeführt wird und in Längsrichtung verschiebbar ist.

In einer bevorzugten Ausführungsform sind die Zungen federnd ausgebildet, so dass diese aufgrund der Federwirkung gegen die Kanalseitenwand drücken.

In einer weiteren Ausführungsform besitzt das Seitenelement eine Zunge mit einer darauf ausgebildeten Nase als Stoßkante.

Als weitere Funktion erfüllt die erfindungsgemäße Erdungskupplung den Potentialausgleich von Leitungsführungskanälen aus Metall. Hierzu befinden sich an einem zur Kanalmitte orientierten Seitenprofil Perforierungen mit Kontaktspitzen. Die Perforierungen sind vorzugsweise regelmäßig an dem Seitenprofil eingestanzt. Jede Perforierung weist vorzugsweise vier, möglichst im rechten Winkel zueinander angeordnete Kontaktspitzen auf, deren Spitzen nach außen in Richtung Kanalmitte geneigt sind. Beim Einführen der Erdungskupplung in einen Kanalabschnitt wird zunächst durch die beiden vorderen Kontaktspitzen die Kanalseitenwand aufgeritzt. Dadurch ist bei beschichteten Kabelkanälen eine saubere Kontaktierung über die hinteren Kontaktspitzen mit der Seitenwand des Kanals möglich.

An dem Seitenprofil ist vorzugsweise ein U-förmig ausgestaltetes Halteprofil vorgesehen, um die erfindungsgemäße Erdungskupplung an das Kanalunterteil zu fixieren.

Vorzugsweise befindet sich an der Stirnseite des Halteprofils eine Einführungsschräge, so dass ein Einführen der Erdungsklammer in die entsprechenden Halteprofile des Kanalunterteils erleichtert wird.

Vorzugsweise ist an der Unterseite des Seitenelementes eine nach innen abgewinkelte Leiste mit einem Zackenprofil am Leistenende ausgebildet, um ein Abstützen des Bauteils gegen das Kanalunterteil zu ermöglichen. Gleichzeitig kann das Zackenprofil mit den einzelnen Zacken auch zum Potentialausgleich beitragen. Bei beschichteten Kanälen können die einzelnen Zacken zum Abkratzen der Beschichtung an der Oberfläche und zur Kontaktherstellung führen. Vorzugsweise besitzt die Stützleiste in etwa der Mitte einen Schlitz, damit die Stützleiste bei der Montage durch den Monteur bei Bedarf leichter nach außen oder nach innen gedrückt werden kann. Auf diese Weise können Kanaltoleranzen ausgeglichen werden.

Vorzugsweise ist die erfindungsgemäße Erdungskupplung aus Blech und wird einstückig gestanzt. Die Kupplung eignet sich für beschichtete oder unbeschichtete Kanäle.

Ein Vorteil der erfindungsgemäßen Erdungskupplung besteht darin, dass zur Verbindung mehrerer Kanalabschnitte sowie zur Erdung des gesamten Kanalprofils nur noch ein Bauteil erforderlich ist. Bislang wurden diese unterschiedlichen Funktionen durch mehrere verschiedene Bauteile erfüllt: einem Kupplungselement zum Verbinden der Kanalabschnitte und Erdungselemente oder Überbrückungsklammern für den Potentialausgleich der Kanalabschnitte sowie des Deckels und Kanalunterteils. Die erfindungsgemäße Erdungskupplung erlaubt es daher, mehrere Kanalabschnitte miteinander zu verbinden und gleichzeitig für den erforderlichen Potentialausgleich zu sorgen.

Die Erfindung wird in den Zeichnungen näher erläutert. Es zeigen
- Fig. 1: eine isometrische Darstellung der Erdungskupplung und eine Ausschnittsvergrößerung der Kontaktspitzen,
- Fig. 2: einen Querschnitt einer in einem Kanalunterteil eingesetzten Erdungskupplung und deren Befestigung an Kanalunterteilelementen in Detaildarstellung,
- Fig. 3: eine isometrische Darstellung einer in einem Kanalabschnitt eingesetzten Erdungskupplung.

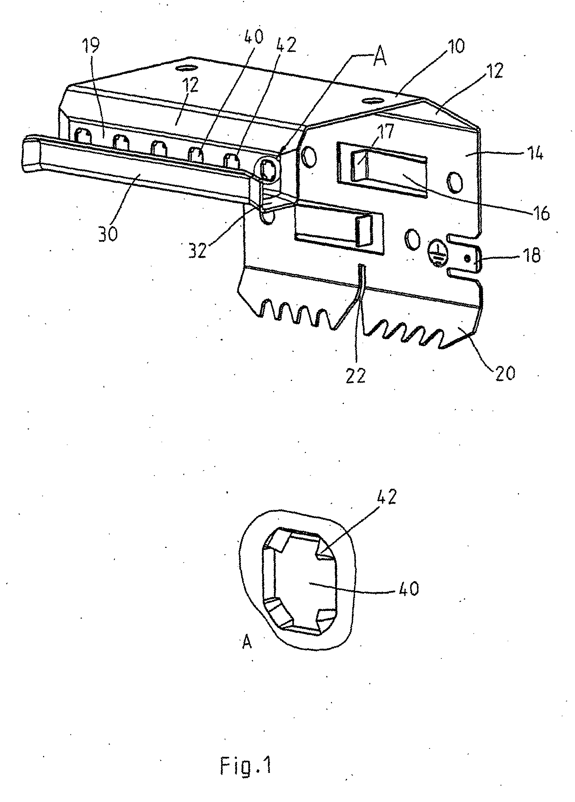

In Fig. 1 erkennt man den Aufbau einer bevorzugten Ausführungsform der erfindungsgemäßen Erdungskupplung. Diese besteht aus einem Deckenelement 10 mit zwei im stumpfen Winkel nach unten geneigten Schenkeln 12. Ferner erkennt man das Seitenelement 14, an dem zwei in Längsrichtung und nach oben versetzte Zungen 16 durch einen dreiseitigen Freischnitt ausgebildet sind. Die Zungen 16 sind an ihrer Spitze nach innen abgewinkelt (abgewinkelter Schenkel 17), vorzugsweise um einen Winkel von etwa 90 °, um beim Einschieben in den Kabelkanal eine Stoßkante für die Außenkante des Kanalunterteils 1 bereit zu stellen. Alternativ kann anstelle des abgewinkelten Schenkels 17 an der Zunge 16 an der Oberseite auch einen nasenartige Erhebung angeformt sein (Ausführungsform in der Zeichnung nicht gezeigt).

An dem Seitenelement 14 ist ferner eine Erdungsfahne 18 erkennbar, an der über einen Steckkontakt eine Potentialausgleichsleitung verbunden wird. Zum Abstützen des Bauteils und Potentialausgleich ist eine Stützleiste 20 vorgesehen, deren Unterseite vorzugsweise zackenförmig ausgestaltet ist. Die Stützleiste kann durch den Monteur je nach Kanaltoleranz nach innen oder außen gedrückt werden, und ist auf diese Weise individuell an den Kanal anpassbar. Um dies zu erleichtern, ist vorzugsweise ein Schlitz 22 vorgesehen. Vorzugsweise sind die Zacken zum Schlitz 22 geneigt.

Auf der gegenüberliegenden Längsseite der erfindungsgemäßen Erdungskupplung erkennt man ein schenkelartig ausgebildetes Seitenprofil 19 mit darin gestanzten Perforierungen 40. Die Ränder der Perforierungen besitzen jeweils vier nach außen gedrückte Kontaktspitzen 42. Vorzugsweise sind die Kontaktspitzen 42 rechtwinklig zueinander angeordnet.

Aus dem Seitenprofil 19 ist ein Halteprofil 30 ausgeformt, das vorzugsweise einen U-förmigen Querschnitt aufweist, um mit dem Halteprofil 2 des Kanalunterteils 1 zu kooperieren. An dessen Stirnseiten ist das Halteprofil 30 an den Seitenkanten und der Unterkante abgeschrägt und bildet eine Einführungsschräge 32. Die Einführungsschräge 32 erleichtert das Einführen der Erdungskupplung in das Halteprofil eines Kanalabschnittes.

In der vergrößerten Darstellung A ist die Anordnung der einzelnen Kontaktspitzen 42 an der gestanzten Perforierung 40 im Detail zu sehen.

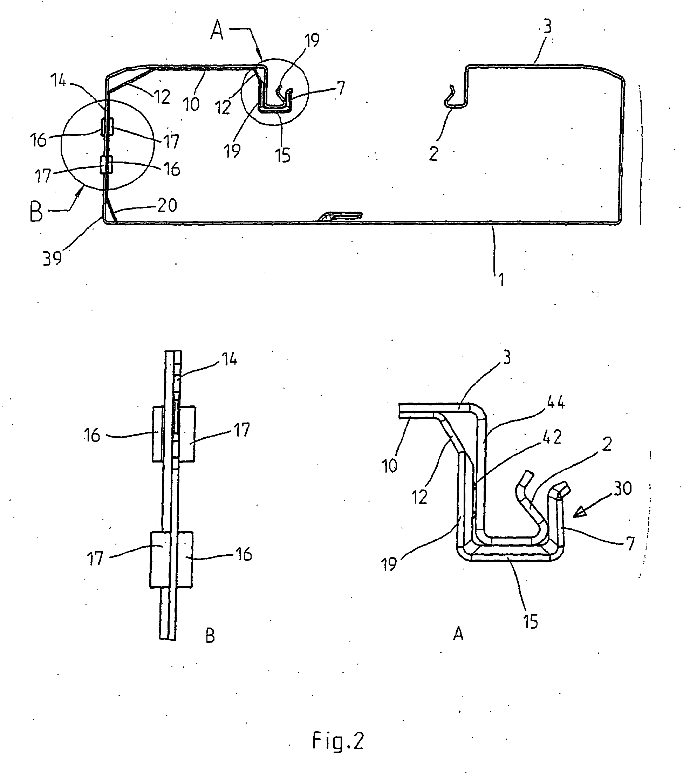

In Fig. 2 erkennt man den Querschnitt einer in einem Kanalabschnitt eingesetzten erfindungsgemäßen Erdungskupplung. Man erkennt das Kanalunterteil 1 mit einem oberen Abschnitt 3 und einem U-förmig ausgebildeten Halteprofil 2. Die Stützleiste 20 stützt sich gegen den Kanalboden ab. Die Zungen 16 stützen sich gegen die Kanalseitenwand 39 ab. Der abgewinkelte Schenkel 17 ist ebenfalls deutlich zu erkennen und in der vergrößerten Darstellung B im Detail gezeigt. Die Fixierung der Erdungskupplung an das Kanalunterteil an der zur Kanalmitte weisenden Seite über Formprofile ist in Detaildarstellung A gezeigt.

Die Kontaktspitzen 42 kratzen in ein Kanalabschnitt 44 des Kanalunterteils 1 und ermöglichen dadurch eine elektrische Kontaktierung. Das Deckenelement 10 der Erdungskupplung wird unter dem oberen Kanalabschnitt 3 des Kanalunterteils 1 geführt. Durch die U-förmige Ausgestaltung des Halteprofils 2 des Kanalunterteils 1 erfolgt ein Klemmverschluss mit dem Halteprofil 30 der Erdungskupplung. Das Halteprofil 30 besitzt eine U-förmige Ausgestaltung, gebildet aus dem Seitenprofil 19, einem Steg 15 und einem Schenkel 7.

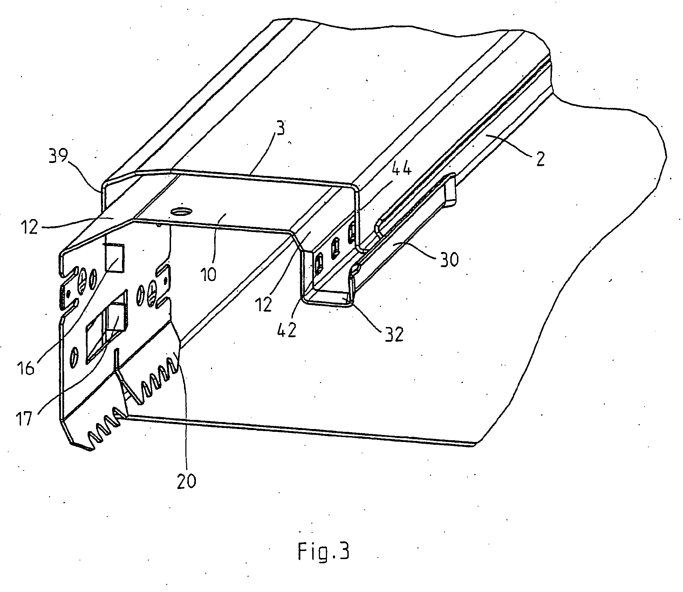

In Fig. 3 ist schließlich gezeigt, wie die erfindungsgemäße Erdungskupplung in einen Kanalabschnitt einsetzbar ist. Wiederum erkennt man die zackenförmig ausgestaltete Stützleiste 20, deren Zacken sich gegen das Kanalunterteil abstützen. Deutlich erkennt man auch die Einführungsschräge 32 an der Stirnseite des Halteprofils 30. Die Erdungskupplung wird bis in etwa zur Hälfte in den Kanalabschnitt eingeführt, bis die Außenkante der Kanalseitenwand 39 auf den abgewinkelten Schenkel 17 der vorderen Zunge 16 stößt. Beim Einführen werden die Zungen 16 nach innen gedrückt.
Vorzugsweise sind die Zungen 16 federnd, wozu die Erdungskupplung aus Federblech herstellt wird. Auf diese Weise wird eine Verschiebesicherung der Erdungskupplung gewährleistet. Die Kontaktierung erfolgt schließlich, wie zuvor beschrieben, über die Kontaktspitzen 42 der Erdungsklammer und dem Kanalabschnitt 44.

## Patentansprüche

1. Erdungskupplung für Leitungsführungskanäle aus Metall, umfassend:
- ein Deckenelement (10),
- ein zur Kanalaußenwand (39) angeordnetes Seitenelement (14),
- ein zur Kanalmitte angeordnetes Seitenprofil (19), an dem ein U-förmiges Halteprofil (30) ausgebildet ist,
- Kontaktspitzen (42) zur elektrischen Kontaktierung des Kanalunterteils (1),
**gekennzeichnet durch die Merkmale:**
- an dem Seitenelement (14) ist **durch** einen dreiseitigen Freischnitt wenigstens eine Zunge (16) ausgebildet,
- die Kontaktspitzen (42) sind an dem Seitenprofil (19) ausgebildet, wobei das Seitenprofil (19) in Längsrichtung ausgestanzte Perforierungen (40) aufweist, an denen sich in etwa rechtwinklig angeordnete Kontaktspitzen (42) befinden, deren Spitzen nach außen zur Kanalmitte geneigt sind.

2. Erdungskupplung nach Anspruch 1, **dadurch gekennzeichnet, dass** sich an der Unterseite des Seitenelements (14) eine nach innen zur Kanalmitte abgewinkelte Leiste (20) befindet, die am Leistenende ein Zackenprofil aufweist.

3. Erdungskupplung nach Anspruch 2, **dadurch gekennzeichnet, dass** die Leiste (20) in etwa der Mitte durch einen Schlitz (22) unterbrochen ist.

4. Erdungskupplung nach einem der vorhergehenden Ansprüche, **dadurch gekennzeichnet, dass** das Deckenelement (10) in Längsrichtung beidseitig zum Kanalboden nach unten im stumpfen Winkel schräg abgewinkelte Schenkel (12) aufweist.

5. Erdungskupplung nach einem der vorhergehenden Ansprüche, **dadurch gekennzeichnet, dass** sich an dem Seitenelement eine Erdungsfahne (18) zur Befestigung einer Potentialausgleichsleitung befindet.

6. Erdungskupplung nach einem der vorhergehenden Ansprüche, **dadurch gekennzeichnet, dass** das Halteprofil (30) an den Stirnseiten eine Einführungsschräge (32) aufweist, um das Einführen der Erdungskupplung in das Halteprofil (2) eines Kabelabschnittes zu erleichtern.

7. Erdungskupplung nach einem der vorhergehenden Ansprüche, **dadurch gekennzeichnet, dass** zwei in Längsrichtung versetzte Zungen (16) an dem Seitenelement (14) ausgebildet sind.

8. Erdungskupplung nach einem der vorhergehenden Ansprüche, **dadurch gekennzeichnet, dass** die Zunge(n) (16) an der Spitze nach innen zur Kanalmitte abgewinkelt sind, um eine Stoßkante (17) zu bilden.

9. Erdungskupplung nach einem der vorhergehenden Ansprüche, **dadurch gekennzeichnet, dass** die Zungen (16) federnd sind.

10. Erdungskupplung nach einem der vorhergehenden Ansprüche, **dadurch gekennzeichnet, dass** das Seitenprofil (19) und das Seitenelement (14) mit dem Deckenelement (10) einen in etwa rechten Winkel bilden.

11. Erdungskupplung nach einem der vorhergehenden Ansprüche, **dadurch gekennzeichnet, dass** die Erdungskupplung einstückig aus Blech gestanzt ist.

12. Leitungsführungskanal aus Metall, umfassend eine Erdungskupplung nach einem der Ansprüche 1 bis 11.

13. Leitungsführungskanal nach Anspruch 12, **dadurch gekennzeichnet, dass** der Kanal beschichtet oder unbeschichtet ist.

## Claims

1. An earthing coupling for cable routing ducts made of metal, comprising:
- a cover element (10),
- a side element (14) arranged towards the duct outer wall (39),
- a side profile (19) arranged towards the duct centre and on which a U-shaped retaining profile (30) is formed,
- contact tips (42) for the electrical contacting of the duct underpart (1),
**characterised by the features:**
- on the side element (14) at least one tongue (16) is formed by being cut free on three sides,
- the contact tips (42) are formed on the side profile (19), wherein the side profile (19) has perforations (40) punched out in longitudinal direction, in which there are disposed contact tips (42) which are arranged approximately at right angles and the tips of which are inclined outwards towards the duct centre.

2. An earthing coupling according to Claim 1, **characterised in that** a strip (20), which is angled inwards towards the duct centre and which is of toothed profile at the strip end, is disposed on the underside of the side element (14).

3. An earthing coupling according to Claim 2, **characterised in that** the strip (20) is interrupted approximately in the centre by a slot (22).

4. An earthing coupling according to any one of the preceding Claims, **characterised in that** the cover element (10) has in a longitudinal direction, on both sides, arms (12) which are angled obliquely at an obtuse angle downwards towards the duct bottom.

5. An earthing coupling according to any one of the preceding Claims, **characterised in that** earthing lug (18) is disposed on the side element for the fastening of an equipotential bonding conductor.

6. An earthing coupling according to any one of the preceding Claims, **characterised in that** at its end faces the retaining profile (30) has insertion bevels (32) to facilitate the insertion of the earthing coupling into the retaining profile (2) of a cable section.

7. An earthing coupling according to any one of the preceding Claims, **characterised in that** two tongues (16), which are offset in a longitudinal direction, are formed on the side element (14).

8. An earthing coupling according to any one of the preceding Claims, **characterised in that** at their tip the tongue(s) (16) are angled inwards towards the duct centre so as to form an abutting edge (17).

9. An earthing coupling according to any one of the preceding Claims, **characterised in that** the tongues (16) are resilient.

10. An earthing coupling according to any one of the preceding Claims, **characterised in that** the side profile (19) and the side element (14) form approximately a right angle with the cover element (10).

11. An earthing coupling according to any one of the preceding Claims, **characterised in that** the earthing coupling is stamped in one piece from sheet metal.

12. A cable routing duct made of metal, comprising an earthing coupling according to any of Claims 1 to 11.

13. A cable routing duct according to Claim 12, **characterised in that** the duct is coated or is uncoated.

## Revendications

1. Connecteur de mise à la terre pour canalisations de câblage en métal, comprenant :
- un élément de recouvrement (10),
- un élément latéral (14) en applique contre la paroi extérieure (39) de la canalisation,
- un profilé latéral (19) pointant vers le centre le ladite canalisation, et sur lequel est ménagé un profilage de retenue (30) configuré en U,
- des ergots de contact (42) dévolus à la mise en contact électrique de la partie inférieure (1) de ladite canalisation,
**caractérisé par** les caractéristiques suivantes :
- au moins une languette (16) est façonnée sur l'élément latéral (14), par découpe sur trois côtés,
- les ergots de contact (42) sont ménagés sur le profilé latéral (19), ledit profilé latéral (19) présentant des perforations (40) poinçonnées dans la direction longitudinale, et sur lesquelles se trouvent des ergots de contact (42) disposés sensiblement à angle droit, dont les pointes sont inclinées vers l'extérieur par rapport au centre de la canalisation.

2. Connecteur de mise à la terre selon la revendication 1, **caractérisé par le fait qu'**un listel (20), muni d'un profilage en dents de scie à son extrémité et coudé vers l'intérieur en direction du centre de la canalisation, est situé à la face inférieure de l'élément latéral (14).

3. Connecteur de mise à la terre selon la revendication 2, **caractérisé par le fait que** le listel (20) est interrompu par une fente (22), à peu près en son centre.

4. Connecteur de mise à la terre selon l'une des revendications précédentes, **caractérisé par le fait que** l'élément de recouvrement (10) est pourvu de part et d'autre, dans le sens longitudinal, de branches (12) coudées à l'oblique vers le bas, à angle obtus, en direction du fond de la canalisation.

5. Connecteur de mise à la terre selon l'une des revendications précédentes, **caractérisé par le fait qu'**une lamelle (18) de raccordement à la terre, dévolue à la fixation d'un conducteur d'équilibrage de potentiels, est située sur l'élément latéral.

6. Connecteur de mise à la terre selon l'une des revendications précédentes, **caractérisé par le fait que** le profilage de retenue (30) est doté d'un biseau d'insertion (32), aux faces extrêmes, en vue de faciliter l'introduction dudit connecteur de mise à la terre dans le profilage de retenue (2) d'une zone de câblage.

7. Connecteur de mise à la terre selon l'une des revendications précédentes, **caractérisé par le fait que** deux languettes (16), décalées dans la direction longitudinale, sont façonnées sur l'élément latéral (14).

8. Connecteur de mise à la terre selon l'une des revendications précédentes, **caractérisé par le fait que** la (les) languette(s) (16) est (sont) coudée(s) vers l'intérieur en direction du centre de la canalisation, au niveau de la pointe, en vue de former une arête de butée (17).

9. Connecteur de mise à la terre selon l'une des revendications précédentes, **caractérisé par le fait que** les languettes (16) sont douées d'élasticité.

10. Connecteur de mise à la terre selon l'une des revendications précédentes, **caractérisé par le fait que** le profilé latéral (19) et l'élément latéral (14) décrivent un angle approximativement droit avec l'élément de recouvrement (10).

11. Connecteur de mise à la terre selon l'une des revendications précédentes, **caractérisé par le fait que** ledit connecteur de mise à la terre est produit d'une seule pièce, par matriçage d'une tôle.

12. Canalisation de câblage en métal, comprenant un connecteur de mise à la terre conforme à l'une des revendications 1 à 11.

13. Canalisation de câblage selon la revendication 12, **caractérisée par le fait que** ladite canalisation est revêtue, ou non revêtue.
